Europäisches Patentamt

European Patent Office

Office européen des brevets

(19)

(11) Veröffentlichungsnummer: **0 132 590**
**B1**

(12) # EUROPÄISCHE PATENTSCHRIFT

(45) Veröffentlichungstag der Patentschrift:
03.09.86

(51) Int. Cl.⁴: **A 61 C  15/00**

(21) Anmeldenummer: **84107089.9**

(22) Anmeldetag: **20.06.84**

(54) Vorrichtung zum Reinigen von Zahnoberflächen, insbesondere Interdentalräumen.

(30) Priorität: **24.06.83  DE 3322737**

(43) Veröffentlichungstag der Anmeldung:
**13.02.85 Patentblatt 85/7**

(45) Bekanntmachung des Hinweises auf die Patenterteilung:
**03.09.86 Patentblatt 86/36**

(84) Benannte Vertragsstaaten:
**AT CH DE FR GB IT LI NL SE**

(56) Entgegenhaltungen:
**DE-U-1 904 126**
**DE-U-7 402 140**
**US-A-1 412 130**
**US-A-1 468 125**
**US-A-1 927 455**

(73) Patentinhaber: **Lex, Christian, Dr., Äussere
Sulzbacher Strasse 37, D-8500 Nürnberg 20 (DE)**

(72) Erfinder: **Lex, Christian, Dr., Äussere Sulzbacher
Strasse 37, D-8500 Nürnberg 20 (DE)**

(74) Vertreter: **Hafner, Dieter, Dr.rer.nat., Dipl.- Phys.,
Ostendstrasse 132, D-8500 Nürnberg 30 (DE)**

## Beschreibung

Die Erfindung betrifft eine Vorrichtung zum Reinigen von Zahnoberflächen, nämlich Interdentalräumen mit den Merkmalen des Oberbegriffes des Anspruches 1.

Eine derartige Vorrichtung ist aus DE-U 7402140 bekannt und besteht i. w. aus einem Reinigungskörper länglicher Form aus biegsamem Material und von keilförmigem Querschnitt auf dem größten Teil seiner Länge, wobei die Seitenteile des keilförmigen Abschnittes des Körpers aufgerauht sind. Das bekannte Zahnreinigungsgerät ermöglicht bereits die Entfernung von Zahnbelag im Zahnzwischenraumbereich, ist aber nicht flexibel und kompressibel genug, um eine wirklich gründliche Entfernung des Zahnbelages auch in unzugänglichen Oberflächenbereichen, beispielsweise Wurzeleindellungen bzw. -einziehungen wirksam zu entfernen. Insbesondere sind der Breitenelastizität des bekannten Reinigungskörpers Grenzen gesetzt, da dieser entweder aus Vollmaterial ausgebildet sein soll (dann ist eine Breitenelastizität nur im Bereich der Materialelastizität möglich) oder als V-förmige Hohlkehle ausgebildet ist (dann wird die Breitenelastizität durch die Steifheit der Längsverbindung der beiden Seitenwandungen stark beeinträchtigt).

Als weiterer Stand der Technik sind kleine Bürstenkörper runder Querschnittsform bekannt, deren Reinigungswirkung aufgrund der relativ geringen Eigensteifheit der einzelnen Borsten begrenzt ist.

Der Erfindung liegt die Aufgabe zugrunde, eine einfach handhabbare Vorrichtung der genannten Art zu schaffen, die ein gründliches Reinigen der Interdentalräume ermöglicht. Diese Aufgabe wird durch die kennzeichnenden Merkmale des Anspruches 1 gelöst.

Kern der Erfindung ist grundsätzlich, den Reinigungskörper als breitenelastischen sowie dauerelastischen Federkörper auszubilden, der sich in Längsrichtung. d. h. Einführungsrichtung. pfeil- oder schiffchenartig verbreitert und auf einen Bruchteil seiner Ausgangsbreite komprimierbar ist. Durch die Breitenelastizität wird ein derartiger Federkörper bestrebt sein, seine Seitenflächen möglichst innig an die Oberflächenkonturen des Zahn-Wurzel-Bereiches anzuschmiegen und damit eine gründliche Säuberung der Oberflächen ermöglichen. Durch die Dauerelastizität ist dafür Sorge getragen, daß der Federkörper - wie schon sein Name besagt immer wieder in seine Ausgangs-Sollage zurückkehrt.

Die Dauerelastizität sorgt auch dafür, daß der Federkörper nicht an beiden Enden gehalten und geführt werden muß, sondern eine Führung und Handhabung am mundäußeren Ende völlig ausreichend ist, um den Putzvorgang zu bewerkstelligen. Die Abriebelemente sollen auf mindestens einer seiner Oberflächen angeordnet sein. Vorteilhaft ist es jedoch, die Oberflächen beider Federkörperseitenwandungen mit Abriebelementen zu versehen.

Darüber hinaus ist die Herstellung des Reinigungskörpers relativ einfach, da dieser durch schiffchenartige Zusammenbiegung eines langgestreckten Streifens geformt werden kann. Das Biegeende wird als Einführungsspitze verwendet und an den beiden Freienden eine Handhabe angebracht.

Die Elastizität des so gebildeten Federkörpers kann je nach Belieben und Breite des Zahnwurzelabstandes durch einen elastischen Stützkörper angepaßt werden, der gemäß Anspruch 3 austauschbar und gemäß Anspruch 4 eine Porenstruktur haben und beispielsweise aus Schaumkunststoff o. dgl. bestehen soll, wodurch flüssige Hygienemittel. z. B. plaquehemmer in den zu reinigenden Bereich gebracht werden können. Die Form des Stützkörpers kann der Form des Schiffchens angepaßt sein. Es ist aber vorteilhaft, in die "Schiffchenmitte" ein Schaumstoffkügelchen zu legen, da dann eine besonders innige Pressung des Schiffchenmittelteiles in die sonst nur problemhaft zu reinigenden Zahnwurzeleindellungen erfolgt.

Ist der Federkörper mit trapezförmigem Querschnitt ausgestaltet, so liegen die Seitenwandungen mehr oder minder flach an den zu reinigenden Zahnflächen an, wobei dem Umstand Rechnung getragen ist, daß sich die Zahnzwischenräume in der Regel zum Zahnfleisch hin trapezförmig erweitern.

Ansprüche 6 und 7 zielen auf eine Erhöhung des Kontaktdruckes zwischen dem Reinigungskörper und der zu putzenden Zahnoberfläche ab, wobei der Reinigungsvorgang durch eine zur longitudinalen Putzbewegung zusätzliche Drehbewegung des Federkörpers um seine Längsachse noch intensiviert wird.

Durch Anspruch 8 in Verbindung mit Anspruch 9 wird eine sehr vorteilhafte Wegführung der Plaque von der zu putzenden Oberfläche in den Innenraum des Federkörpers vorgenommen, da die Lochränder nach Art von Reinigungskeilen den Belag von der Oberfläche abnehmen und nach innen wegführen. Weitere vorteilhafte Strukturen der Seitenwandungen bzw. Formen der Abriebelemente werden durch Ansprüche 10, 11, und 12 gelehrt. Durch Anspruch 14 werden Verletzungen des Zahnfleischgewebes weitgehend vermieden, so daß die Vorrichtung nicht nur vom erfahrenen Arzt verwendet, sondern auch in Patientenhand gegeben werden kann und somit eine wesentliche Bereicherung des Mundhygieneartikel-Marktes darstellt.

Durch die gelenkige Befestigung des Federkörpers an einem Griff kann die Vorrichtung auf einfache Weise auch in schwer zugängliche Bereiche, beispielsweise den Backerzahnbereich, eingeführt und dort verwendet werden, wobei sich ein durch einen Schieber aufspreizbares Kugelgelenk als besonders vorteilhaft erweist.

Durch die Anordnung einer Wasserdüse im oder am Federkörper wird bereits beim Reinigungsvorgang der abgetragene Zahnbelag von den Zähnen weggespült und damit eine besonders gründliche Reinigung gewährleistet. Vorteilhafterweise wird der Federkörper dazu auf das Mundstück einer Munddusche aufgesetzt.

Die Erfindung ist anhand einiger Ausführungsbeispiele in den Figuren der Zeichnungnäher erläutert. Es zeigen:

Fig. 1 eine schematische Darstellung eines Federkörpers,

Fig. 2 einen Schnitt durch einen Federkörper mit eingelegtem Stützkörper entlang Linie A-A in Fig. 1,

Fig. 3 einen Teilschnitt wie Fig. 2 durch eine mit einem Wulst versehene Seitenwandung,

Fig. 4 eine vergrößerte Darstellung der Seitenwandung mit sich nach innen öffnenden Löchern als Abriebelemente,

Fig. 5 eine schematische Schnittdarstellung einer Seitenwandung mit Gitterstruktur,

Fig. 6 eine schematische Darstellung eines Griffes mit aufspreizbarem Kugelgelenk und angesetztem Federkörper.

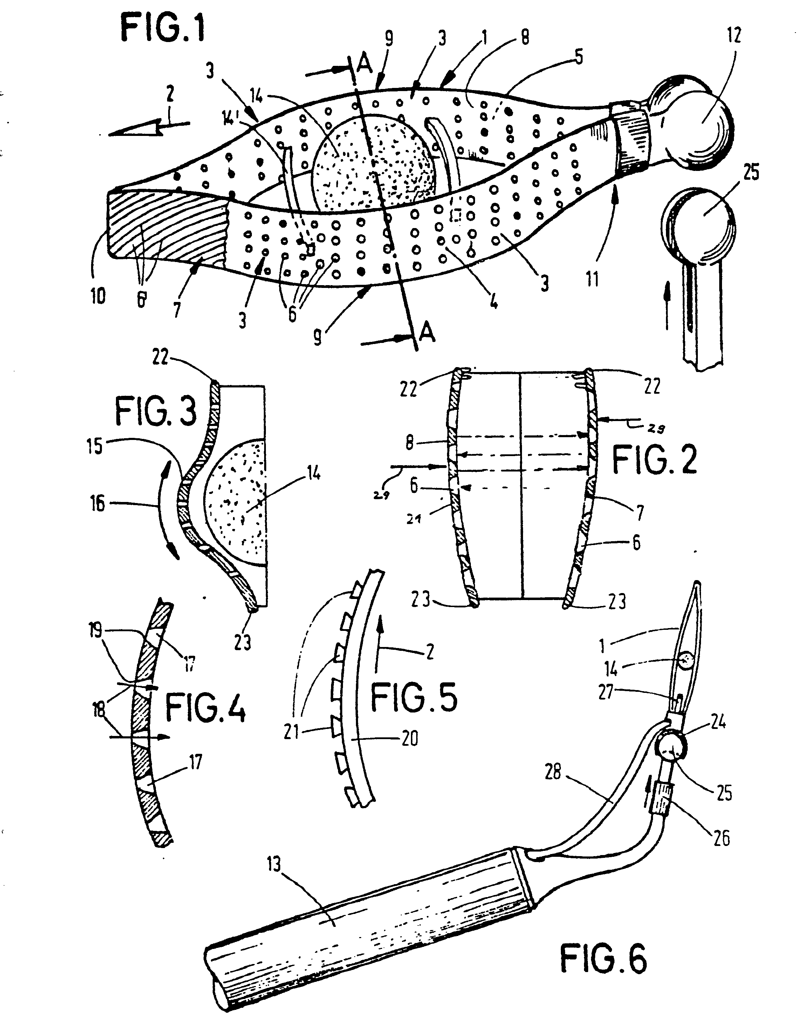

Die Vorrichtung zum Reinigen von Interdentalräumen besteht im wesentlichen aus einem Federkörper 1, der als in Einführungsrichtung 2 pfeil- oder schiffchenartig ausgebildet sowie in Richtung der Pfeile 3 breitenelastisch ist. Auf seinen Oberflächen 4, 5 ist er mit Abriebelementen 6 versehen, die beim in Fig. 1 gezeigten Ausführungsbeispiel Löcheroder eine Verzahnung 6' sind.

Der Federkörper 1 hat zwei die Oberflächen 4, 5 bildende Seitenwandungen 7, 8, deren Mittelbereiche 9 konvexförmig ausgebogen sind, an ihrem einen Ende zu einer gemeinsamen Einführungsspitze 10 zusammenlaufen und an ihrem zweiten Ende 11 über ein Kugelgelenk 12 an einer Handhabe, nämlich einem Griff 13 befestigt sind.

Zwischen den beiden Seitenwandungen 7, 8 liegt ein elastischer Stützkörper 14 ein, der beim Ausführungsbeispiel Kugelform hat, aber auch eiförmig oder dem durch die Seitenwandungen 7, 8 gebildeten schiffchenartigen Innenraum des Federkorpers angepaßt sein kann. Der einlegbare Stützkörper hat nicht näher dargestellte Poren und kann aus Schaumgummi o.dgl. bestehen. Ebenso ist es auch möglich, zwischen den Seitenwandungen angeformte Biege-Querstege vorzusehen.

Wie insbesondere Fig. 2 besonders deutlich zeigt, hat der Federkörper 1 einen trapezförmigen Querschnitt, wobei die Seiten des Trapezes von den beiden Seitenwandungen 7, 8 gebildet werden. Wie weiterhin aus Fig. 2 zu entnehmen ist, sind die Seitenwandunen 7, 8 rechtwinklig zur Einführungsrichtung 2 zusätzlich zur Längswölbung quer, d.h. von oben nach unten verlaufend gewölbt, wobei bei der Wölbung ein konstanter Krümmungsradius eingehalten ist. Eine andere Art dieser Wölbung zeigt Fig. 3, bei welcher die Seitenwandung mittig mit einer wulstartigen Ausbuchtung versehen ist, die etwa in Einführungsrichtung 2 verläuft, so daß bei Verdrehung des Federkörpers 1 um seine Längsachse eine Abriebbewegung der Ausbuchtung in Pfeilrichtung 16 auf der Zahnoberfläche wirksam wird.

Wie insbesondere Fig. 4 besonders deutlich zeigt, haben die als Löcher 17 ausgebildeten Abriebelemente 6 einen trapez- oder kegelförmigen Querschnitt, wobei sich ihr Durchmesser zur Federkörperinnenseite hin in Pfeilrichtung 18 erweitert, so daß durch die außenliegenden Kanten 19 die Plaque nach Art eines Hobels förmlich vom Zahn abgetragen und in Pfeilrichtung 18 in den Federkörper hineintransportiert wird.

Allerdings ist auch eine maschenähnliche oder netzartige Struktur denkbar, wie sie in Fig. 5 gezeigt ist. Dort sind auf in Einführungsrichtung 2 verlaufenden inneren Drähten oder Leisten 20 trapezförmige äußere Leisten 21 aufgesetzt, beispielsweise aufgelötet, die die gleiche Hobelwirkung wie die Kanten 19 der Löcher 17 haben. Des weiteren ist es möglich, die Seitenwandungen mit kegelstumpfartigen Noppen zu versehen, wobei allerdings dann keine Abführung der Plaque zur Federkörperinnenseite erfolgen kann. Die Längskanten 22, 23 der Seitenwandungen 7, 8 sind zur Schonung des Zahnfleisches abgerundet. Vorteilhafterweise besteht der Federkörper aus Nylon. Die versetzte Noppen- oder Leistenanordnung erlaubt ein gegenseitiges "Eintauchen" der Seitenwandungen 7, 8, wenn der Federkörper in Pfeilrichtung 2g gepreßt wird.

Das Kugelgelenk 12 ist als verrastbares und insbesondere trennbares Kugelgelenk ausgebildet. Dies geschieht - wie in Fig. 6 gezeigt - dadurch, daß die Kugel 25 als geteilte, aufspreizbare Kugel in eine Gelenkpfanne 24 eingeführt und dort verspreizt werden kann. Die Gelenkpfanne 24 umgreift mehr als den Halbmesser der Kugel, so daß ein fester Sitz erreicht wird. Die Aufspreizung der Kugel 25 kann mittels eines am Griff 13 angeordneten Schiebers 26 vollzogen werden, wobei ein nicht dargestelltes Keilelement in die Kugel einfährt und diese auseinanderspreizt.

Im Inneren des Federkörpers 1 ist eine Wasserdüse 27 angeordnet, die über einen Druckschlauch 28 mit der Pumpe einer an sich bekannten Munddusche verbunden ist.

## Patentansprüche

1. Vorrichtung zum Reinigen von Zahnoberflächen, nämlich Interdentalräumen, mit einem länglichen, in den zu reinigenden Zwischenraum einzuführenden Reinigungskörper, der in Längsrichtung flexibel und um seine Längsachse verwindbar ist, in Einführungsrichtung (2) pfeil- oder schiffchenartig sowie breitenelastisch ausgebildet ist und auf mindestens einer seiner Oberflächen (4, 5) mit Abriebelementen (6) versehen ist,

dadurch gekennzeichnet,

daß der Reinigungskörper zum Abtragen von Zahnbelag (Plaque) als aus zwei nebeneinander liegenden, elastischen, getrennt ausgebildeten Seitenwandungen (7, 8) bestehender, oben und unten offener Federkörper (1) ausgebildet ist, wobei der Mittelbereich (9) der Seitenwandungen (7, 8) etwa konvexförmig ausgebogen ist, die Seitenwandungen (7, 8) an ihrem einem Ende zu einer gemeinsamen Einführungsspitze (10) zusammenlaufen und an ihrem zweiten Ende (11) als Handhabe dienen oder an einer solchen befestigt sind.

2. Vorrichtung nach Anspruch 1,

dadurch gekennzeichnet,

daß zwischen den Seitenwandungen (7, 8) ein oder mehrere elastische Stützkörper (14) angeordnet sind.

3. Vorrichtung nach Anspruch 2,

dadurch gekennzeichnet,

daß der/die Stützkörper (14) austauschbar ist/sind.

4. Vorrichtung nach den Ansprüchen 2 oder 3,

dadurch gekennzeichnet,

daß der als gesonderte Einlage ausgebildete Stützkörper (14) saugfähige Poren hat.

5. Vorrichtung nach einem der vorhergehenden Ansprüche,

dadurch gekennzeichnet,

daß der Federkörper (1) einen trapezförmigen Querschnitt hat.

6. Vorrichtung nach einem der vorhergehenden Ansprüche,

dadurch gekennzeichnet,

daß die Seitenwandungen (7, 8) eine stetige und unter Beibehaltung eines konstanten Krümmungsradius verlaufende konvexe Krümmung aufweisen.

7. Vorrichtung nach einem der vorhergehenden Ansprüche,

dadurch gekennzeichnet,

daß die Seitenwandung (7, 8) in ihrem Mittelbereich mit einer wulstartigen Ausbuchtung (15) versehen ist.

8. Vorrichtung nach einem der vorhergehenden Ansprüche,

dadurch gekennzeichnet,

daß die Seitenwandung (7, 8) gelocht ist.

9. Vorrichtung nach Anspruch 8,

dadurch gekennzeichnet,

daß die Löcher (17) einen trapez- oder kegelförmigen Querschnitt haben derart, daß sich ihr Durchmesser zur Federkörperinnenseite hin (18) öffnet.

10. Vorrichtung nach einem der vorhergehenden Ansprüche,

dadurch gekennzeichnet,

daß die Seitenwandungen (7, 8) eine maschenähnliche, netz- oder gewebeartige Struktur aufweisen.

11. Vorrichtung nach einem der vorhergehenden Ansprüche,

dadurch gekennzeichnet,

daß die Netzelemente Leisten (21) mit trapezförmigem Querschnitt sind. wobei die auf der Oberfläche des Federkörpers (1) liegenden Leisten (21) rechtwinklig oder schräg zur Einführungsrichtung (2) verlaufen.

12. Vorrichtung nach einem der vorhergehenden Ansprüche,

dadurch gekennzeichnet.

daß die Seitenwandungen (7, 8) mit kegelstumpfartigen Noppen versehen sind, die sich zu ihren Befestigungsenden hin verjüngen und die Abriebelemente bilden.

13. Vorrichtung nach einem der vorhergehenden Ansprüche.

dadurch gekennzeichnet,

daß die Längskanten (22, 23) der Seitenwandungen (7, 8) abgerundet sind und/oder im Bereich der Innenwandung mit leistenartigen Versteifungen versehen sind.

14. Vorrichtung nach einem der vorhergehenden Ansprüche,

dadurch gekennzeichnet.

daß die Leisten (21) Versteifungen oder Noppen sich gegenüberliegender Bereiche der beiden Seitenwandungen (7, 8) derart gegenseitig versetzt angeordnet sind. daß die Leisten (21) oder Noppen der einen Seitenwandung (7) beim Zusammenpressen des Federkörpers in Querrichtung in die Zwischenräume der anderen Seitenwandung (8) zur Minimierung der Federkörperbreite eintauchen und umgekehrt.

15. Vorrichtung nach einem der vorhergehenden Ansprüche,

dadurch gekennzeichnet,

daß das zweite Ende (11) des Federkörpers (1) mittels eines Gelenkes (12) an einer Handhabe (13) befestigt ist.

16. Vorrichtung nach einem der vorhergehenden Ansprüche,

dadurch gekennzeichnet,

daß das Gelenk ein feststellbares Kugelgelenk (I2)ist.

17. Vorrichtung nach einem der vorhergehenden Ansprüche,

dadurch gekennzeichnet,

daß die Kugel (25) des Gelenkes durch einen Schieber (26) aufspreizbar ist, in eine Gelenkpfanne (24) eingreift und in dieser arretierbar ist.

18. Vorrichtung nach einem der vorhergehenden Ansprüche,

dadurch gekennzeichnet,

daß in oder am Federkörper (1) mindestens eine Wasserdüse (27) angeordnet ist.

## Claims

1. Device for cleaning tooth surfaces, namely interdental spaces, with an elongated cleaning member adapted to be introduced into the intermediate space to be cleaned and which is flexible in a longitudinal direction and adapted to be twisted about its longitudinal axis, being constructed like an arrow or small boat in the direction (2) of insertion and being elastic in its width, being provided with abrading elements (6) on at least one of its surfaces (4. 5),

characterised in that

in order to remove plaque, the cleaning member is constructed as a spring member (1) open at the top and bottom and consisting of two adjacently disposed resilient and separately constructed side walls (7, 8) the middle zone (9) of the side walls (7, 8) being bent outwardly in a substantially convex shape, the side walls (7, 8) convering at one end to a common insertion tip (10), and serving at their second end (11) as a hand grip or as a means of attachment to such a hand grip.

2. Device according to Claim 1,

characterised in that

one or a plurality of elastic supporting members (14) is/are disposed between the side walls (7, 8).

3. Device according to Claim 2,

characterised in that

the supporting member(s) (14) is/are interchangeable.

4. Device according to Claims 2 or 3,

characterised in that

the supporting member (14) which is constructed as a seperate insert has absorbent pores.

5. Device according to one of the preceding Claims,

characterised in that

the spring member (1) has a trapezoidal crosssection.

6. Device according to one of the preceding Claims,

characterised in that

the side walls (7, 8) have a constant and, while retaining a constant radius of curvature, a convex curvature.

7. Device according to one of the preceding Claims,

characterised in that

the middle portion of the side walls (7, 8) is provided with a bead-like bulge (15).

8. Device according to one of the preceding Claims,

characterised in that

the side wall (7, 8) is perforated.

9. Device according to Claim 8,

characterised in that

the holes (17) have a trapezoidal or conical cross-section so that their diameter opens out towards the inside (18) of the spring member.

10. Device according to one of the preceding Claims,

characterised in that

the side walls (7, 8) have a mesh-like, reticulated or woven-like structure.

11. Device according to one of the preceding Claims,

characterised in that

the elements of the reticulated structure are strips (21) of trapezoidal cross-section, the strips (21) lying on the surface of the spring member (1) extending at a right-angle or obliquely to the direction (2) of insertion.

12. Device according to one of the preceding Claims,

characterised in that

the side walls (7, 8) are provided with frustoconical knobs which taper towards their fixing ends and which constitute the abrading elements.

13. Device according to one of the preceding Claims,

characterised in that

the longitudinal edges (22, 23) of the side walls (7, 8) are rounded off and/or are provided with strip-like reinforcements in the region of the inner wall.

14. Device according to one of the preceding Claims,

characterised in that

the strips (21), reinforcements or knobs of oppositely disposed areas of the two side walls (7, 8) are so offset in respect of one another that when the spring member is pressed together in the transverse direction, the strips (21) or knobs on one side wall (7) engage into the intermediate spaces in the other side wall (8) or vice versa in order to minimize the width of the spring member.

15. Device according to one of the preceding Claims,

characterised in that

the second end (11) of the spring member (1) is attached to a hand grip (13) by means of a joint (12).

16. Device according to one of the preceding Claims,

characterised in that

the joint is a ball joint (12) which can be locked in position.

17 Device according to one of the preceding Claims,

characterised in that

the ball (25) of the joint can be opened out by a push member (26), engages a ball cup (24) in which latter it can be locked.

18. Device according to one of the preceding Claims,

characterised in that

at least one water jet (27) is disposed in or on the spring member (1).

## Revendications

1. Dispositif de nettoyage pour surfaces dentaires, à savoir pour espaces interdentaires, avec un corps de nettoyage de forme allongée à introduire dans les espaces à nettoyer qui est flexible dans le sens de sa longueur et mobile sur son axe de longueur, en forme de flèche ou de barquette dans le sens d'introduction (2), élastique dans sa largeur et pourvu d'éléments de friction (6) sur une de ses surfaces (4, 5) au moins

caractérisé par le fait que

le corps de nettoyage pour enlever la plaque bactérielle dentaire est conçu tel que deux parois latérales souples sont disposées l'une à côté de l'autre formant un ressort ouvert en haut et en bas; la partie médiane (9) des parois (7, 8) est courbée convexe, les parois latérales (7, 8) se joignent pour former à une extrémité une pointe d'introduction (10), à l'autre (11) une prise ou bien elles sont fixées à une telle.

2. Dispositif selon revendication 1

caractérisé par le fait que

un ou plusieurs supports souples (14) sont disposés entre les parois (7, 8).

3. Dispositif selon revendication 2

caractérisé par le fait que

le (les) support(s) (14) est (sont) échangeable(s).

4. Dispositif selon les revendications 2 ou 3 caractérisé par le fait que

le support (14) en annexe séparée a des pores absorbantes.

5. Dispositif selon l'une des revendications mentionnées ci-dessus

caractérisé par le fait que

le ressort (1) a une coupe transversale en forme de trapèze.

6. Dispositif selon l'une des revendications mentionnées ci-dessus

caractérisé par le fait que

les parois latérales (7, 8) présentent une courbure convexe constante avec toujours le même rayon de courbure.

7. Dispositif selon l'une des revendications mentionnées ci-dessus

caractérisé par le fait que

la paroi latérale (7, 8) est pourvue d'un renflement (15) dans sa partie médiane.

8. Dispositif selon l'une des revendications mentionnées ci-dessus

caractérisé par le fait que

la paroi latérale (7, 8) est perforée.

9. Dispositif selon revendication 8

caractérisé par le fait que

les perforations (17) dont la coupe transversale est en forme de trapèze ou de cône montrent leur diamètre à l'intérieur du ressort (18).

10. Dispositif selon l'une des revendications mentionnées ci-dessus

caractérisé par le fait que

les parois latérales (7, 8) sont structurées comme des mailles, un filet ou du tissu.

11. Dispositif selon l'une des revendications mentionnées ci-dessus

caractérisé par le fait que

les éléments qui forment le filet sont des tringles de coupe transversale en trapèze; les tringles à la surface du ressort sont disposées en perpendiculaire ou en biais du sens de direction.

12. Dispositif selon l'une des revendications mentionnées ci-dessus

caractérisé par le fait que

les parois latérales (7, 8) sont pourvues des noppes en cône tronqué qui retrécissent à leurs points de fixation et forment les éléments de friction.

13. Dispositif selon l'une des revendications mentionnées ci-dessus

caractérisé par le fait que

les bordures (22, 23) des parois (7, 8) sont arrondies et/ou pourvues de renvorcements en forme de tringles à l'intérieur.

14. Dispositif selon l'une des revendications mentionnées ci-dessus

caractérisé par le fait que

les tringles (21), renforcements ou noppes des deux parois (7, 8) sont disposés face à face intercalés de telle manière que les tringles (21) ou noppes d'une paroi (7) plongent dans les intervalles de l'autre paroi (8) à la pression du ressort et vice versa ce qui réduit ainsi la largeur du ressort.

15. Dispositif selon l'une des revendications mentionnées ci-dessus

caractérisé par le fait que

la deuxième extrémité (11) du ressort (1) est fixée à une prise (13) par l'interméditaire d'une articulation (12).

16. Dispositif selon l'une des revendications mentionnées ci-dessus

caractérisé par le fait que

l'articulation est un joint articulé (12) que l'on peut rendre immobile.

17. Dispositif selon l'une des revendications mentionnées ci-dessus

caractérisé par le fait que

la rotule (25) du joint d'articulation s'ouvre par un coulisseau (25), entre dans une cavité articulaire (24) et peut être arrêtée dans celle-ci.

18. Dispositif selon l'une des revendications mentionnées ci-dessus

caractérisé par le fait que

au moins un gicleur (27) est disposé dans ou sur le ressort (1).

# FIG.1

# FIG.3

# FIG.2

# FIG.4

# FIG.5

# FIG.6